# EUROPEAN PATENT APPLICATION

(11) **EP 1 932 586 A1**
(43) Date of publication of application: **18.06.2008**
(21) Application number: 07024145.0
(22) Date of filing: 12.12.2007
(51) Int. Cl.: B01J 19/00, B01L 3/00, G01N 1/40, G01N 35/02

(54) **Instrument for forming solid phase of protein, protein solid phase forming device, and protein expression amount and activity value measuring device**

(30) Priority: 13.12.2006 JP 2006335424
(71) Applicant: SYSMEX CORPORATION, Kobe-shi, Hyogo 651-0073 (JP)
(72) Inventor: Kobayashi, Hironori, c/o SYSMEX CORPORATION, Kobe-shi, Hyogo 651-0073 (JP)
(74) Representative: HOFFMANN EITLE

(57) **Abstract**

An instrument for forming a solid phase of protein on a porous film; the instrument including a substrate plate member including a first and a second regions provided with a plurality of through holes; a first porous film; a first plate member including a third region provided with a plurality of through holes facing the first region, the third region being arranged to face the first region of the substrate member and the first porous film being sandwiched between the third region and the first region; a second porous film; and a second plate member including a fourth region provided with a plurality of through holes facing the second region, the fourth region being arranged to face the second region of the substrate plate member and the second porous film being sandwiched between the fourth region and the second region is provided.

## Description

### FIELD OF THE INVENTION

The present invention relates to an instrument for forming a solid phase of_the protein on a porous film, a protein solid phase forming device using the instrument, and a protein expression amount and activity value measuring device.

### BACKGROUND

Conventionally, an instrument including first and second templates each having a flat surface for holding a porous film in between is known, where the first template includes a concave part and a plurality of first through holes in the flat surface, the second template includes a convex part to be fitted with the concave part and a plurality of second through holes corresponding to the first through holes in the flat surface, and the corresponding first and second through holes become coaxial to each other and the first and second templates are detachably fixed when the first and second templates are overlapped and the convex part is fitted into the concave part (Japanese laid-open patent No. 2004020437).

The instrument includes a great number of wells formed by the porous film and the first through holes, where protein sample solution is injected to the wells and then suctioned through the porous film to form the solid phase of the protein on the porous film for every well.

However, the protein sample must be injected to each well and collectively suctioned after injection to all the wells is completed in the above instrument, and thus when forming the solid phases of the plurality of types of protein sample having different preparation methods, an instrument must be separately prepared to form the solid phase of the protein at the respective preparation timing. In the conventional instrument, evaporation of the injected protein sample and degree of infiltration through the porous film differ between the well to which the sample is injected the first and the well to which the sample is injected the last.

### SUMMARY

The scope of the present invention is defined solely by the appended claims, and is not affected to any degree by the statements within this summary.

In view of the above, it is an object of the present invention to provide an instrument for forming a solid phase of protein in which a plurality of other instruments for forming a solid phase of protein does not need to be prepared even when forming the solid phases of a plurality of protein samples having different preparation methods, and in which temporal loss required for forming the solid phase can be reduced. It is also another object of the present invention to provide an instrument for forming a solid phase of protein in which the difference in the state of the protein sample between the wells caused by temporal difference in injection is reduced.

A first aspect of the present invention is an instrument for forming a solid phase of protein on a porous film, comprising: a substrate plate member including a first region provided with a plurality of through holes and a second region provided with a plurality of through holes; a first porous film; a first plate member including a third region provided with a plurality of through holes, the third region being arranged to face the first region and the first porous film being sandwiched between the third region and the first region; a second porous film; and a second plate member including a fourth region provided with a plurality of through holes, the fourth region being arranged to face the second region and the second porous film being sandwiched between the fourth region and the second region.

The instrument has the first region and the second region formed in the substrate plate member, and the first plate member corresponding to the first region and the second plate member corresponding to the second region arranged separately.Therefore, the solid phase can be individually formed in the first region and the second region. Whereby, temporal loss required for forming the solid phase can be reduced even when forming the solid phases of a plurality of proteins having different preparation methods. And difference in the state of the protein sample of each well due to time difference of injection can be also reduced.

The instrument is configured such that the first plate member is arranged on the substrate plate member so that each through hole formed in the third region and the first porous film form a well, and the second plate member is arranged on the substrate plate member so that each through hole formed in the fourth region and the second porous film form a well.

Since the wells are formed by arranging the first plate member and the second plate member on the substrate member, the instrument having a simple configuration can be achieved.

In the instrument, the substrate plate member may include a convex part for partitioning the first region and the second region, and the first plate member and the second plate member may each include a groove engaging the convex part of the substrate plate member.

According to such configuration, the instrument can be assembled with a simple operation.

The instrument may be configured further including a first filter and a second filter, where the first porous film and the first filter are sandwiched by the third region and the first region, and the second porous film and the second filter are sandwiched by the fourth region and the second region.

Since the porous films and the filters are sandwiched between the plate members, filter can retain moisture so that the porous films do not dry up.

Moreover, the solid phase for expression amount measurement of the protein may be formed on the first porous film, and the solid phase for activity measurement of the protein may be formed on the second porous film.

The solid phase for expression amount measurement and the solid phase for activity measurement of the protein can be formed in separate regions of the instrument, and the temporal loss of when forming the solid phase using the protein expression amount measurement sample and the protein activity value measurement sample having different preparation times can be reduced.

A second aspect of the present invention is a protein solid phase forming device comprising: an instrument holder for holding an instrument for forming a solid phase of protein on a porous film; a first suction member arranged so as to face a first region of the instrument held by the instrument holder; a second suction member arranged so as to face a second region of the instrument held by the instrument holder; and a suction driving member for selectively driving the first suction member and the second suction member; wherein the instrument for forming a solid phase of protein comprises, a substrate plate member including the first region provided with a plurality of through holes and the second region provided with a plurality of through holes, a first porous film, a first plate member including a third region provided with a plurality of through holes, the third region being arranged to face the first region and the first porous film being sandwiched between the third region and the first region, a second porous film, and a second plate member including a fourth region provided with a plurality of through holes, the fourth region being arranged to face the second region and the second porous film being sandwiched between the fourth region and the second region.

the protein solid phase forming device is configured including the instrument holder for holding the instrument; a first suction member arranged so as to face a first region of the instrument held by the instrument holder; a second suction member arranged so as to face a second region of the instrument held by the instrument holder; and a suction driving member for selectively driving the first suction member and the second suction member.

Since the protein solid phase forming device is equipped with the suction driving member for selectively driving the first suction member and the second suction member, each sample on the porous film can be separately suctioned to form the solid phase.

The protein solid phase forming device may also include a mounting member for mounting a first sample solubilized with a living body sample and a substrate of the protein to be measured in the first sample; a sample preparation member for preparing a second sample for activity measurement using the first sample and the substrate; and a dispensing member for dispensing the first sample to the through holes of the third region and the second sample to the through holes of the fourth region.

The dispensing of the first sample, and the preparation and dispensing of the second sample can be automatically performed by arranging the dispensing member and the sample preparation member.

In the protein solid phase forming device, the mounting member mounts a first labeled substance which specifically binds to the protein to be measured, and a second labeled substance which specifically binds to a reaction product of the protein to be measured and the substrate; the sample preparation member prepares the second sample using the first sample, the substrate, and the second labeled substance; and the dispensing member dispenses the first labeled substance to the through holes of the third region dispensed with the first sample, and dispenses the second sample prepared by the sample preparation member to the through holes of the fourth region.

According to such configuration, the solid phase in which the protein to be measured and the first labeled substance are bound is formed in the third region, and the solid phase in which the reaction product and the second labeled substance are bound is formed in the fourth region. A third aspect of the present invention is a measuring device for measuring expression amount and activity value of protein, the measuring device comprising: a protein solid phase forming device; and a measuring member for measuring an expression amount of the protein by measuring a solid phase formed on a first porous film, and measuring an activity value of the protein by measuring a solid phase formed on a second porous film; wherein the protein solid phase forming device comprises, an instrument holder for holding an instrument for forming the solid phase of the protein on the first porous film and the second porous film, a first suction member arranged so as to face a first region of the instrument held by the instrument holder, a second suction member arranged so as to face a second region of the instrument held by the instrument holder; and
a suction driving member for selectively driving the first suction member and the second suction member; and
the instrument comprises, a substrate plate member including the first region provided with a plurality of through holes and the second region provided with a plurality of through holes, the first porous film, a first plate member including a third region provided with a plurality of through holes, the third region being arranged to face the first region and the first porous film being sandwiched between the third region and the first region, the second porous film, and a second plate member including a fourth region provided with a plurality of through holes, the fourth region being arranged to face the second region and the second porous film being sandwiched between the fourth region and the second region. The measuring device for measuring expression amount and activity value of protein, the measuring device including the protein solid phase forming device described above; and a measuring member for measuring an expression amount of the protein to be measured by measuring a solid phase for expression amount measurement formed on a first porous film, and measuring an activity value of the protein to be measured by measuring a solid phase for activity measurement formed on a second porous film.

The formation of the solid phase to measurement of the expression amount and the activity of the protein to be measured can be automatically performed by arranging the measuring member.

A fourth aspect of the present invention is an instrument for forming a solid phase of protein on a porous film, comprising: a substrate plate member including a first region provided with a plurality of through holes and a second region provided with a plurality of through holes; a first porous film; a second porous film; and a plate member including a third and a fourth regions provided with a plurality of through holes, the third region being arranged to face the first region and the first porous film being sandwiched between the third region and the first region, the fourth region being arranged to face the second region and the second porous film being sandwiched between the fourth region and the second region.

The plate member of the fourth aspect of the present invention has the all configurations included in the first and second plate members of the first aspect of the present invention. Since the wells are formed by arranging one plate member on the substrate member, the instrument can be assembled with more simple operation.

According to the instrument of the present invention, the temporal loss required for forming the solid phase can be reduced, and difference in the state of the protein sample of each well due to time difference of injection can be reduced.

### BRIEF DESCRIPTION OF THE DRAWINGS

Fig. 1 is a perspective explanatory view of a measuring device according to a first embodiment of the present invention;
Fig. 2 is a perspective explanatory view of an instrument setting member and an instrument in the measuring device shown in Fig. 1;
Fig. 3 is a cross sectional explanatory view of the instrument setting member and the instrument in the measuring device shown in Fig. 1;
Fig. 4 is an exploded explanatory view of an upper plate and a lower plate of the instrument;
Fig. 5 is a perspective explanatory view of the instrument with the upper plate attached to the lower plate;
Fig. 6 is a cross sectional explanatory view of a column of a sample preparation member of the activity measurement unit in the measuring device shown in Fig. 1;
Fig. 7 is a perspective view of the sample preparation member of the activity measurement unit in the measuring device shown in Fig. 1;
Fig. 8 is a top view of a fluid manifold of the sample preparation member shown in Fig. 7;
Fig. 9 is a cross sectional view taken along line D-D of Fig. 8;
Fig. 10 is a fluid circuit diagram of the sample preparation member shown in Fig. 7;
Fig. 11 is a cross sectional explanatory view of another example of the column of the sample preparation member;
Fig. 12 is a block diagram showing hardware configuration of the control means;
Fig. 13 is a block diagram showing a control system for controlling the measuring device;
Fig. 14 is a view showing an overall flow of the process by the measuring device;
Fig. 15 is a view showing a flow of a process of preparing expression amount measurement sample;
Fig. 16 is a view showing a flow of a process of preparing activity measurement sample;
Fig. 17 is an explanatory view showing usage procedures of specimen etc. in the measuring device;
Fig. 18 is a sequence flowchart of each process of the expression amount measurement sample and the activity measurement sample;
Fig. 19 is a view showing an overall flow of one example of the measuring process of the expression amount and the activity value by the measuring device;
Fig. 20 is an explanatory view of a treating member for enzyme reaction of an activity measurement unit according to another embodiment;
Fig. 21 is an explanatory view of a treating member for fluorescent labeling reaction of the activity measurement unit according to another embodiment; and
Fig. 22 is a view showing a flow of a process of preparing the activity measurement sample using the activity measurement units shown in Figs. 20 and 21.

### DETAILED DESCRIPTION OF THE PREFERRED EMBODIMENTS

Embodiments of a protein expression amount and protein activity value measuring device (hereinafter also referred to as "measuring device") equipped with a protein solid phase forming device, as well as an instrument for forming a solid phase of protein will now be described with reference to the accompanying drawings.

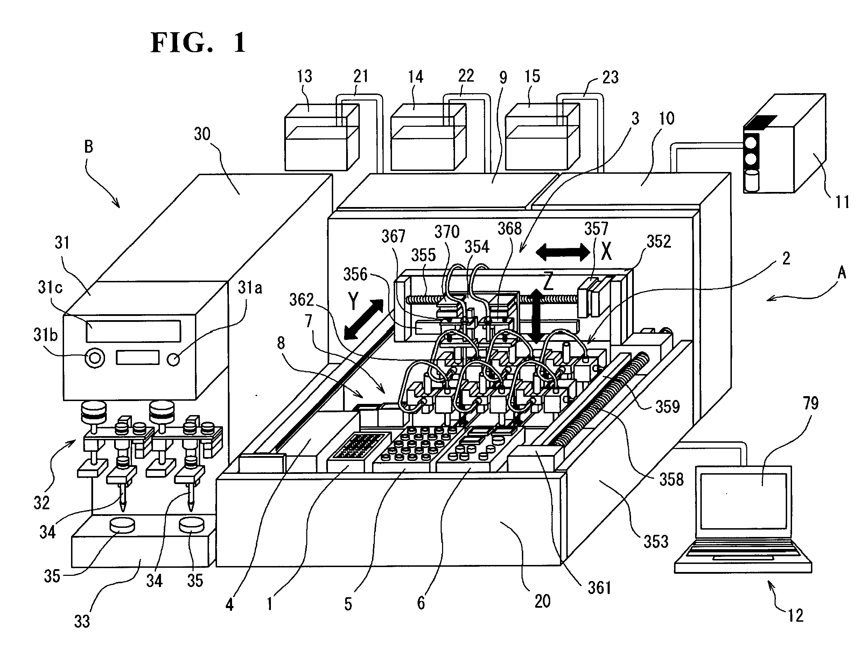

Fig. 1 is a perspective explanatory view of a measuring device according to a first embodiment. The measuring device A measures the activity value and the expression amount of the protein (cyclin-dependent kinase (CDK) contained in the tissue in the present embodiment), and is mainly configured by a detecting member 4 arranged at the front portion of an apparatus body 20; an instrument setting member 1; first reagent setting member 5 and second reagent setting member 6; an activity measurement unit 2 arranged at the back portion of the apparatus body 20; a waste bath 7 for accommodating waste and a pipette washing bath 8 for washing pipettes; a dispensing mechanical member 3, arranged on the upper side of the apparatus body 20, for moving the pipette in three directions (X direction, Y direction, Z direction); a fluid member 9 and an electronic board 10 arranged at the back part of the apparatus body 20; and a personal computer 12 which is a control means communicably connected to the detecting member 4 and the electronic board 10. A pure water storage tank 13, a washing liquid tank 14, a waste tank 15, and a pneumatic source 11 are also arranged in the measuring device A of the present embodiment. The pure water storage tank 13 stores pure water for washing the flow channel at the end of measurement and is connected to the fluid member 9 by way of a conduit 21; the washing liquid tank 14 stores washing liquid for washing the pipette and is connected to the pipette washing bath 8 by way of a conduit 22; and the waste tank 15 for accommodating waste is connected to the waste bath 7 by means of a conduit 23. Furthermore, a solubilizing device B for obtaining a specimen that can be processed in the measuring device A from a living body sample is arranged next to the measuring device A.

The solubilizing device B and the measuring device A will be described below.

### [Solubilizing device]

The solubilizing device B prepares liquid specimen that can be processed in the measuring device A from the living body sample such as tissue extracted from a patient prior to the process of the measuring device A, and is mainly configured by a housing 30, an operating member 31 arranged on the upper side of the front surface of the housing 30, a driving member 32 including a pair of pestels 34 for pressing and grinding the living body sample, and a specimen setting member 33 to be set with an eppen tube 35 accommodating the living body sample.

The driving member 32 moves the pestels 34 in the up and down direction and provides rotational movement thereto, so that the living body sample injected into the eppen tube 35 is pressed and gridded. A controlling member (not shown) for controlling the operation of the driving member 32 is arranged in the housing 30.

An operation button 31a, an operation light 31b, and a display member 31c for displaying the state of the apparatus and error message are arranged on the operating member 31. A cooling means (not shown) is arranged in the specimen setting member 33 to maintain the living body sample in the eppen tube set in the concave area of the upper surface of the specimen setting member 33 at a constant temperature.

The supernatant solution of the living body sample solubilized by the solubilizing device B and subjected to centrifugal process by a centrifugal machine is extracted to a predetermined specimen container and set in the first reagent setting member 5 of the measuring device A.

### [First reagent setting member]

A cooling means (not shown) is arranged in the first reagent setting member 5, similar to the specimen setting member 33, to maintain the specimen, various antigens such as CDK1 antigen (calibration 1) and CDK2 antigen (calibration 2), and various fluorescent labeled antibody such as fluorescent labeled CDK1 antibody and fluorescent labeled CDK2 in the container such as screw cap to be set in the concave area of the upper surface of the first reagent setting member 5 to a constant temperature. In the present embodiment, a total of 20 concave areas are formed in a matrix of five by four, so that a maximum of 20 containers such as screw cap can be set.

### [Second reagent setting member]

The second reagent setting member 6 is arranged next to the first reagent setting member 5. A plurality of concave areas is formed in the second reagent setting member 6, similar to the first reagent setting member 5, where containers such as eppen tube and screw cap with buffer, substrate liquid solution, and fluorescent enhancement reagent are set in the concave areas.

Prior to the process of the measuring device A, the instrument for forming a solid phase of protein is set in the instrument setting member 1, and the column is set in the activity measurement unit 2.

### [Instrument setting member]

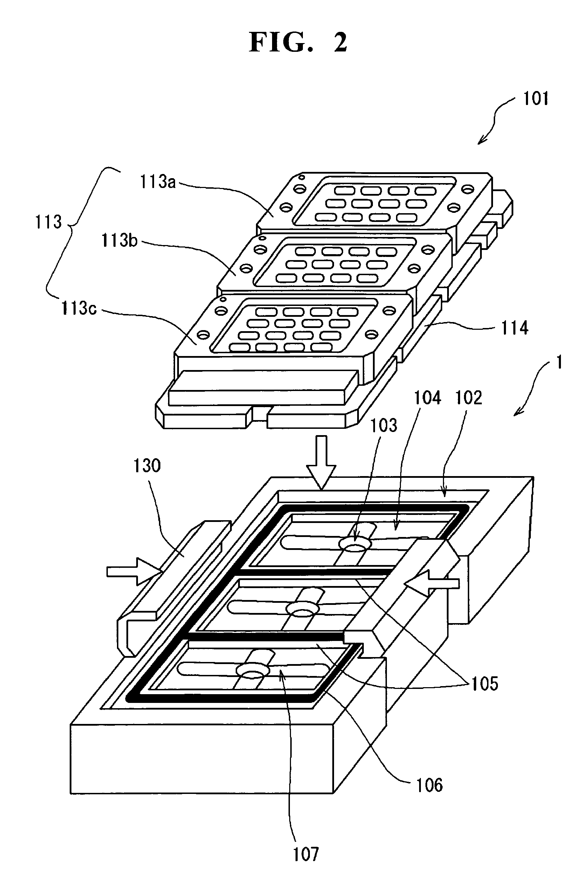

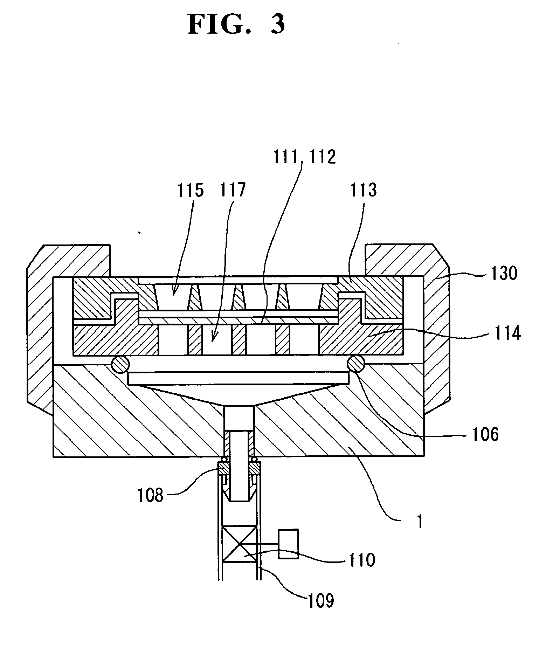

The instrument setting member 1 is made up of aluminum blocks, where a concave part 102 for mounting the instrument 101 is formed at the upper surface and three suction ports 103 are formed at the bottom part, as shown in Figs. 2 and 3. More specifically, the instrument setting member 1 includes a first concave part 102 of rectangular shape at the upper surface, and three second concave parts 104 of rectangular shape at the bottom of the first concave part 102. The second concave parts 104 are independent from each other by a partition wall 105 so as to be in a non-communicating state when the instrument 101 is mounted on the instrument setting member 1. A rubber elastic gasket 106 of rectangular shape is arranged on the peripheral edge of the second concave part 104 at the bottom surface of the first concave part 102.

The second concave part 104 includes a cross-shaped groove 107 at the bottom part and the suction port 103 at the center of the bottom part, where the bottom of the groove 107 is inclined so as to become deeper towards the center from the peripheral edge of the second concave part 104. The three suction ports 103 of the instrument setting member 1 communicate with a nipple 108 arranged to connect to an external suction pneumatic source 11. A tube 109 having one end connected to the suction pneumatic source 11 side has the other end connected to the nipple 108. An open/close valve 110 is arranged in the tube 109. The open/close valves 110 corresponding to the three suction ports 103 are independently openable/closable. Thus, an arbitrary region divided by three upper plates 113a, 113b, 113c of the instrument, to be hereinafter described, is independently suctioned.

The instrument 101 to be hereinafter described in detail is mounted horizontally at the bottom surface of the first concave part 102 by way of a gasket 106. The suction pump is activated after the protein containing sample solution is injected or dropped into each well of the instrument 101.

The instrument 101 is then air tightly attached to the bottom surface of the first concave part 102 by way of the gasket 106, and the sample solution in each well is suctioned through the porous film, to be hereinafter described, whereby the protein to be measured is solid phase formed on the porous film. In Figs. 2 and 3, 130 is a pressing mechanism for pressing and fixing the instrument 101 to the bottom surface of the first concave part 102. The pressing mechanism 130 slides in a direction of the arrow in the figure after the instrument 101 is mounted on the first concave part 102, and the upper part thereof presses the upper surface of the instrument 101 and fixes the same to the first concave part 102.

As shown in Figs. 3 to 5, the instrument 101 is configured by a porous film 111 and a filter paper 112, and upper plate 113 and lower plate 114 for sandwiching the porous film 111 and the filter paper 112. The instrument 101 has a function of contacting the antibody liquid solution containing antibody of cyclin-dependent kinase and the living body sample (specimen).

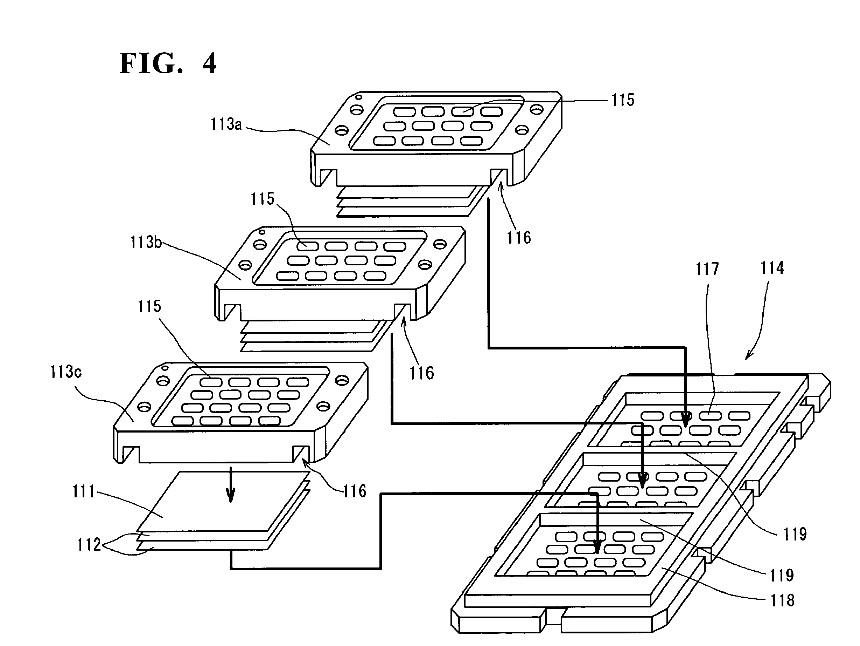

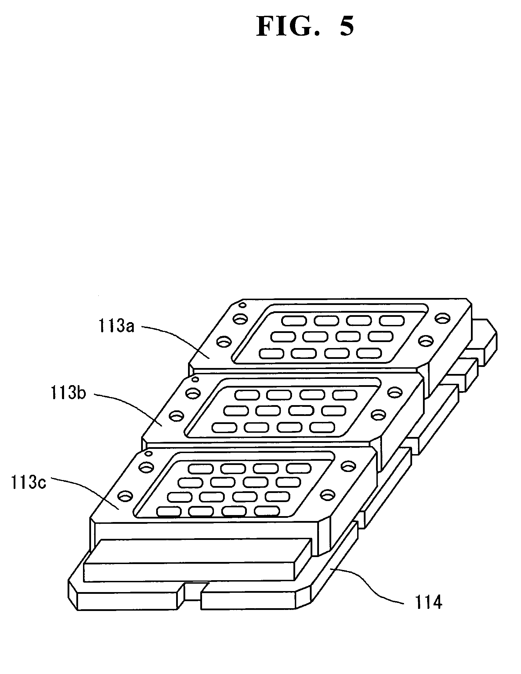

As shown in Figs. 4 and 5, the upper plate 113 is configured by three plates independent from each other, that is, a first upper plate 113a, a second upper plate 113b, and a third upper plate 113c. Each upper plate has a rectangular plate shape, where the first upper plate 113a and the second upper plate 113b are both perforated with twelve oval through holes 115 arrayed in a matrix form of four by three, and the third upper plate 113c is perforated with sixteen oval through holes 115 arrayed in a matrix form of four by four. Each upper plate includes a region, which is independent from each other for sample processing, provided with a plurality of through holes. A groove 116 is formed along a short side at the bottom surface of each upper plate.

A total of forty oval through holes 117 arrayed in a matrix form is formed in the lower plate 114 having a rectangular plate shape at positions corresponding to each through hole 115 of the upper plates 113a, 113b, 113c. The through holes 117 have the same shape and cross sectional area as the through holes 115. The lower plate 114 has a region provided with a plurality of through holes corresponding to each region of the upper plates 113a, 113b, 113c.

A rib-shaped convex part 118 which goes around the periphery of the forty through holes 117 once, and a partition wall 119 for partitioning the through holes 117 to three regions in correspondence to each region of the upper plate 113a, 113b, 113c are formed on the upper surface of the lower plate 114. Three rectangular porous film installing regions are partitioned on the inner side by the convex part 118 and the partition wall 119. The upper plate 113 and the lower plate 114 are made of vinyl chloride resin and the like.

As shown in Figs. 2 to 5, a stacked body including the porous film 111 and the filter paper (filter) 112 is mounted on the porous film installing region of the lower plate 114, and the grooves 116 of each upper plate 113a, 113b, 113c are sequentially fitted to the convex part 118 of the lower plate 114, so that the upper plates 113a, 113b, 113c area attach the lower plate 114 thereby forming the instrument 101. Each through hole 115 and each through hole 117 then become coaxial to each other.

The instrument described above has the upper plate 113 divided into three, so that three regions can be suctioned independently. For instance, when suctioning the region of the upper plate 113a, the open/close valves 110 of the suction ports 103 corresponding to the upper plates 113b and 113c are closed, and the open/close valve 110 of the suction port 103 corresponding to the upper plate 113a is opened. The suction pneumatic source 11 then performs suctioning in such state so that only the region of the upper plate 113a is selectively and independently suctioned.

The number of upper plates is not particularly limited in the present invention. The number of upper plates is appropriately selected in view of the number of measuring items and the number of specimens.

### [Activity measurement unit]

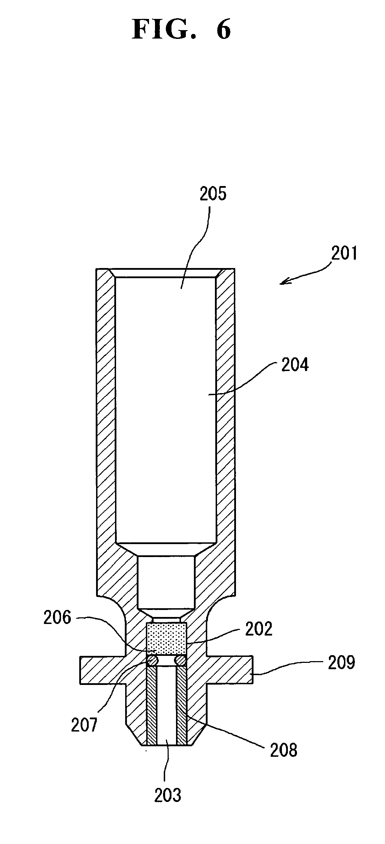

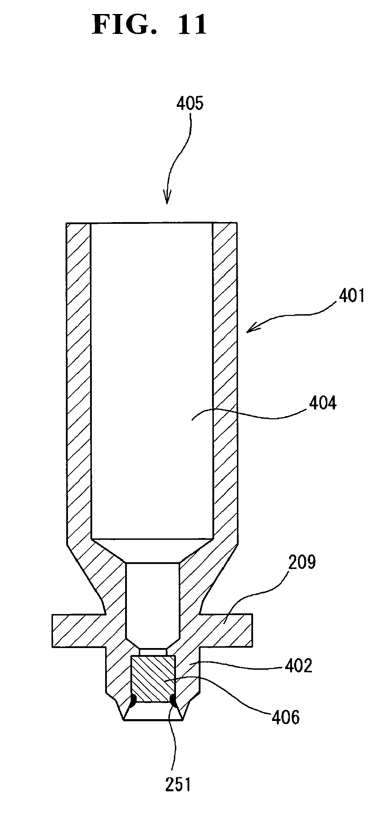

As shown in Figs. 6 to 11, the activity measurement unit 2 includes a plurality of sample preparation members 211 each including a column 201 and a fluid manifold 213, and is used to measure the activity value of the CDK. The column 201 may take the form shown in Fig. 6 or the form shown in Fig. 11.

The column 201 shown in Fig. 6 is made of a cylindrical body made of vinyl chloride resin, and includes therein a carrier holding member 202 for holding a carrier 206 used to isolate the target substance in the liquid sample, and a liquid storage member 204 for receiving and storing the liquid sample to introduce such liquid sample to the carrier holding member 202. The column 201 has an opening 205 through which the liquid sample is externally injected or from which the liquid sample is extracted at the upper part of the liquid storage member 204, and includes a connection flow channel 203 for introducing the liquid sample to the fluid manifold 213 and receiving the liquid sample from the fluid manifold 213 at the lower part of the carrier holding member 202. The column 201 configures a means for contacting the substrate liquid solution containing a predetermined substrate and the living body sample (specimen).

The carrier 206 is made of monolithic silica gel of circular cylinder shape, where the monolithic silica gel has a configuration in which the three-dimensional network framework and the clearance thereof are integrated, as opposed to the particle carrier. The predetermined CDK antibody is immobilized to the monolithic silica gel. The carrier 206 is inserted to the carrier holding member 202 from the lower opening of the column 201, and is elastically pushed and supported by a fixing pipe 208 by way of an O-ring 207. The fixing pipe 208 is press-fit from the lower opening of the column 201, where the hole of the fixing pipe 208 and the O-ring 207 forms the connection flow channel 203.

The column 401 shown in Fig. 11 is made of a cylindrical body made of polypropylene, and includes therein a carrier holding member 402 for holding a carrier 406 used to isolate the target substance in the liquid sample, and a liquid storage member 404 for receiving and storing the liquid sample to introduce such liquid sample to the carrier holding member 402. The column 401 has an opening 405 through which the liquid sample is externally injected or from which the liquid sample is extracted at the upper part of the liquid storage member 404, and also has an opening for introducing the liquid sample to the fluid manifold 213 and receiving the liquid sample from the fluid manifold 213 at the lower part of the carrier holding member 402. The column 401 configures a means for contacting the substrate liquid solution containing a predetermined substrate and the living body sample (specimen).

The carrier 406 is made of a monolithic silica gel of circular cylinder shape, where the monolithic silica gel has a configuration in which the three-dimensional network framework and the clearance thereof are integrated, as opposed to the particle carrier. The predetermined CDK antibody is immobilized to the monolithic silica gel. The carrier 406 is inserted to the carrier holding member 402 from the lower opening of the column 401, and is supported by a thermal welding member 251 provided with ultrasonic wave at the periphery of the bottom surface.

A mounting flange 209 for mounting and fixing the column 201, 401 to the sample preparation member 211 is formed at the lower end of the column 201, 401. The flange 209 is an oval flange formed by cutting out both sides of a disc shaped flange having a diameter D in parallel so as to have a width W (W<D).

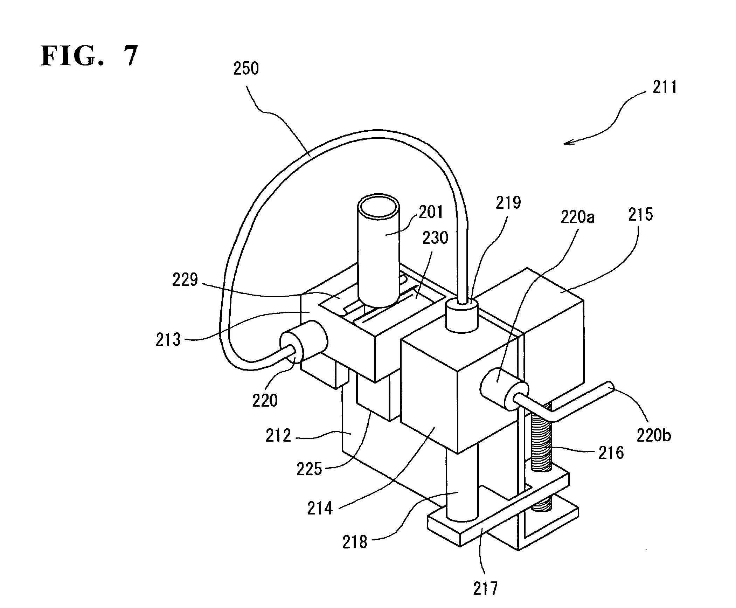

Fig. 7 is a perspective view of the sample preparation member 211, where the sample preparation member 211 includes an L-shaped supporting plate 212, and the fluid manifold 213, a syringe pump 214, and a stepping motor with reducer 215 are fixed on the supporting plate 212, as shown in the figure.

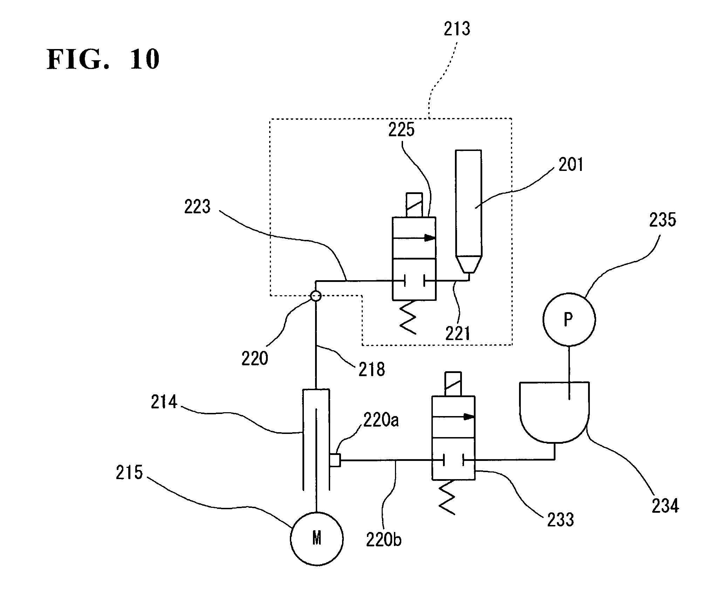

A screw shaft 216 is connected to the output shaft of the stepping motor 215. A drive arm 217 to be screw fit to the screw shaft 216 is connected to the distal end of a piston 218 of the syringe pump 214. The piston 218 moves up and down when the screw shaft 216 is rotated by the stepping motor 215. The syringe pump 214 and the fluid manifold 213 are connected to a liquid feeding tube 250 by way of connectors 219, 220. The syringe pump 214 is connected to a chamber 234 (see Fig. 10) accommodating fluid (washing liquid) for filling the flow channel by a liquid feeding tube 220b through a connector 220a.

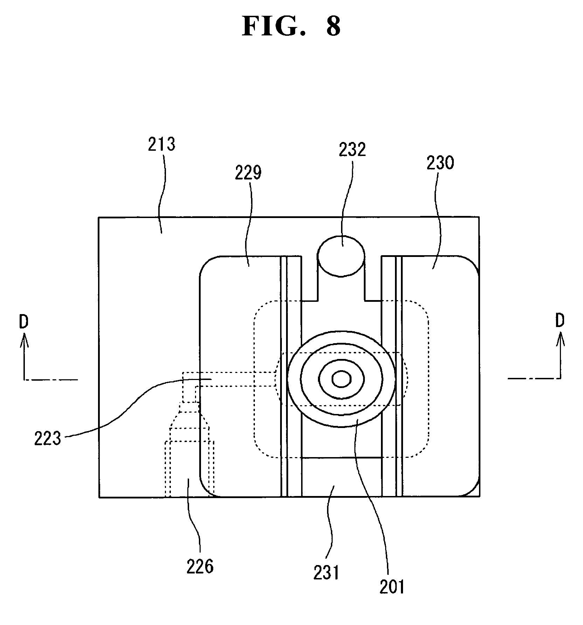

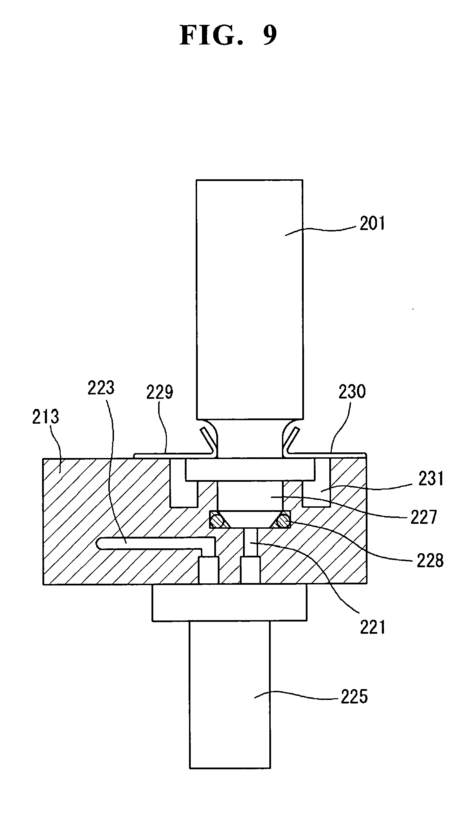

As shown in Figs. 8 and 9, the fluid manifold 213 includes a column connecting part 221 to which the lower opening of the column 201 is connected.

The fluid manifold 213 includes a flow channel 223 therein, and has an electromagnetic valve 225 for opening/closing the flow channel 223 and the column connecting part 221 on the lower surface. The fluid manifold 213 has on the side surface a connector connection screw hole 226 for connecting a connector 220, which screw hole 226 is connected to the flow channel 223.

Fig. 10 is a fluid circuit diagram of the sample preparation member 211, where a state in which the syringe pump 214 is connected to the fluid manifold 213 by way of the connector 220 is shown. A chamber 234 is connected to the syringe pump 214 by way of the electromagnetic valve 233, and positive pressure is applied to the chamber 234 from a positive pressure source 235.

A method of mounting the column 201 to the fluid manifold 213 will now be described.

As shown in Figs. 8 to 10, a column mounting concave part 227 for receiving the lower end of the column 201 is formed on the upper surface of the fluid manifold 213, the center of the bottom part of the concave part 227 passing through the column connecting part 221, and an O-ring 228 being attached to the circumference of the bottom part. Two pressing plates 229, 230 having a cross section of L-shape are fixed in parallel on the upper surface of the fluid manifold 213 at an interval wider than the width W and narrower than D with the column mounting concave part 227 as the center.

In order to prevent specimen or reagent that has passed the carrier 206 inside the column 201 fixed to the fluid manifold 213 from contacting fluid (washing liquid) that fills the flow channel 223 inside the fluid manifold. 213 and being diluted, the electromagnetic valve 225 is opened (electromagnetic valve 233 is closed) and the syringe pump 214 is suction operated by about 16µL before the column 201 is fixed to the column mounting concave part 227. The liquid level of the column connecting part 221 thereby lowers and an air gap forms.

Subsequently, the column 201 is mounted to column mounting concave part 227 so that the flange 209 passes between the pressing plates 229, 230, and then rotated clockwise or counterclockwise by 90 degrees. The portion of the diameter D of the flange 209 engages the pressing plates 229, 230, and the flange 209 is fixed by the pressing plates 229, 230 due to the elasticity of the O-ring 228. When removing the column 201, the column 201 is rotated either to the left or the right by 90 degrees while pushing.

When the column 201 is mounted to fluid manifold 213 of the sample preparation member 211, the concave part 227 of the fluid manifold 213 is manually or automatically filled with dispensed fluid to prevent mixture of air bubbles, but when the distal end of the column 201 is inserted to the concave part 227, the fluid flows out due to increase in volume. An overflow storage concave part 231 is arranged at the periphery of the column mounting concave part 227 to prevent the fluid from flowing out to the surrounding, and an overflow liquid discharge concave part 232 for suctioning and discharging the overflow liquid by pipette is arranged at one part of the overflow liquid storage concave part 231.

Various specimens and reagents are injected or suctioned to or from a predetermined location by the dispensing mechanical member 3 equipped with the pipette.

The operation of the upper opening 205 of the column 201 of when the specimen or the reagent is injected will now be described. The electromagnetic valve 225 is opened (electromagnetic valve 233 is closed), and the syringe pump performs the suctioning operation when the specimen or the reagent is injected to the opening 205. The air gap and the specimen or the reagent is passed through the electromagnetic valve 225, and then suctioned to the syringe pump side. The syringe pump then performs ejecting operation. The specimen or the reagent is then passed through the electromagnetic valve 225, and sent to the column 201.

### [Dispensing mechanical member]

As shown in Fig. 1, the dispensing mechanical member 3 includes a frame 352 for moving the pipette in the X direction, a frame 353 for moving the pipette in the Y direction, and a plate 354 for moving the pipette in the Z direction.

The frame 352 includes a screw shaft 355 for moving the plate 354 in the direction of the arrow X, a guide bar 356 for supporting and slidably moving the plate 354, and a stepping motor 357 for rotating the screw shaft 355.

The frame 353 includes a screw shaft 358 for moving the plate 352 in the direction of the arrow Y, a guide bar 359 for supporting and slidably moving the frame 352, and a stepping motor 361 for rotating the screw shaft 358.

The plate 354 includes a screw shaft 367 for moving an arm 368 for supporting the pipette 362 in the direction of the arrow Z, a guide bar for supporting and slidably moving the arm 368, and a stepping motor 370 for rotating the screw shaft 367.

In the present embodiment, since the dispensing mechanical member 3 is equipped with a pair of pipettes 362, reagent etc. is simultaneously injected to two specimen containers and content is simultaneously suctioned from two specimen containers, whereby the measuring process can be efficiently performed.

### [Fluid member]

As shown in Fig. 1, a fluid member 9, connected to the pipette washing bath 8 for washing the pipette 362 and each sample preparation member 211, for operating the fluid is arranged at the rear part of the apparatus body 20. As shown in Fig. 10, the fluid member 9 includes an electromagnetic valve 225 of each sample preparation member 211, an electromagnetic valve 233 for controlling the fluid when filing the liquid from the washing liquid chamber to the syringe 214, an electromagnetic valve for controlling fluid when suctioning and ejecting the liquid with the pipette 362, an electromagnetic valve for controlling the fluid when suctioning the liquid discarded from the pipette 362 in the waste bath 7, and an electromagnetic valve for controlling the fluid when washing the pipette 362 in the pipette washing bath 8.

### [Electronic board]

Furthermore, an electronic board 10 for providing drive signals to each sample preparation member 211, stepping motors 357, 361, 370, the fluid member 9, and the like is arranged at the rear part of the apparatus body 20.

### [Detecting member]

The detecting member 4 is provided to measure the fluorescent substance amount reflecting the protein amount captured at the porous film 111 of the instrument 101 and the fluorescent substance amount reflecting the amount of phosphate group, where excitation light is irradiated on the instrument 101, the generated fluorescence is detected, and the electric signal having a magnitude corresponding to the intensity of the detected fluorescence is output to the electronic board 10. A generally used detecting member configured by light source unit, illumination system, and light receiving system is appropriately adopted for the detecting member 4.

### [Control means]

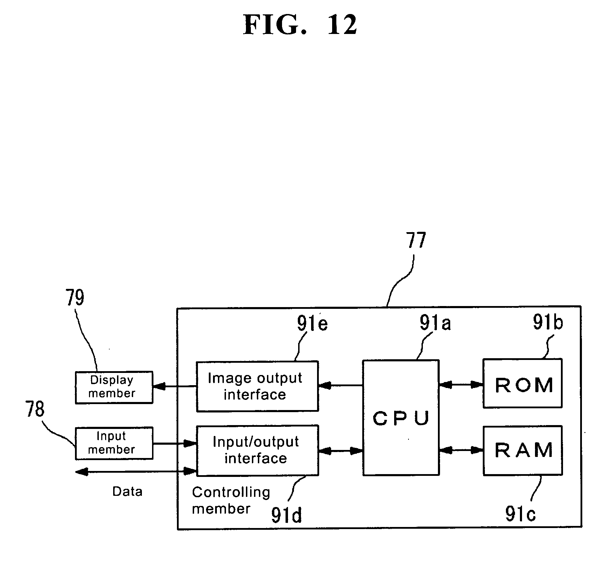

As shown in Fig. 12, the personal computer 12 or a control means includes a controlling member 77 connected to the electronic board 10, an input member 78 for inputting data etc. to the controlling member 77, and a display member 79 for displaying result of analysis and the like. The controlling member 77 configures an analyzing means, an activity value acquiring means for acquiring the activity value from the fluorescence intensity using analytical curve, an expression amount acquiring means for acquiring the expression amount from the fluorescence intensity using the analytical curve in the present invention.

As shown in Fig. 12, the controlling member 77 includes a CPU 91a, a ROM 91b, a RAM 91c, an input/output interface 91d, and an image output interface 91e. The ROM 91b is stored with operating system, control program for controlling the operation of the apparatus, and data necessary for execution of the control program. The CPU 91a loads the control program to the RAM 91c, or directly executes the control program from the ROM 91b. The data of the result processed by the CPU 91a in such manner is transmitted to the electronic board 10 via the input/output interface 91d, and the data necessary for processing by the CPU 91a is received from the electronic board 10 via the input/output interface 91d. The electronic board 10 is controlled when the CPU 91 executes the control program. The CPU 91a acquires the expression amount or the activity value of the cyclin-dependent kinase based on the fluorescence intensity obtained in the detecting member 4. The analytical curve, which is the conversion data for converting the fluorescence intensity to expression amount or activity value, is stored in the RAM 91c to acquire the expression amount or the activity value. The analytical curve may be obtained for every measurement of the expression amount or the activity value.

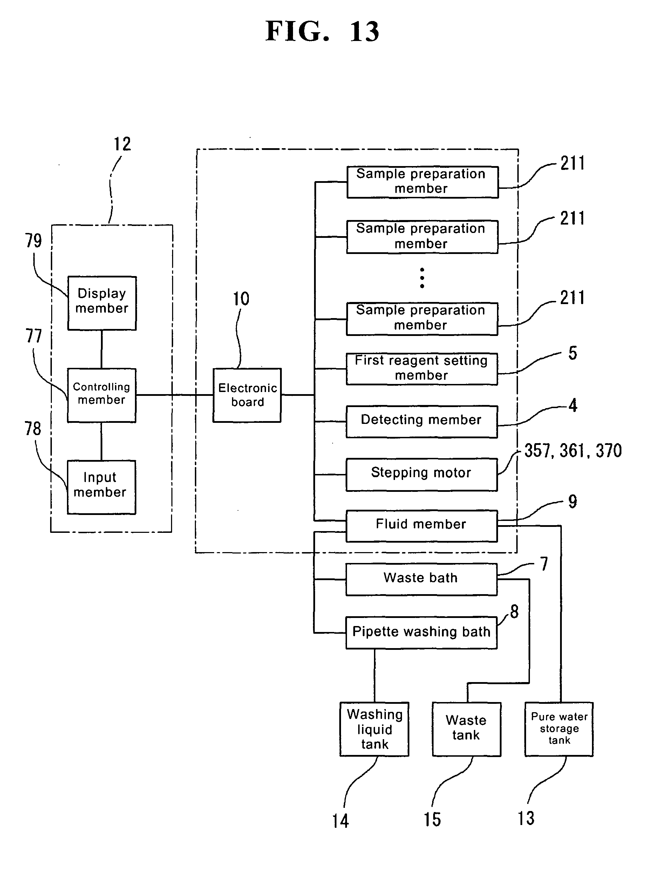

Fig. 13 is a block diagram of a control system for controlling the measuring device A of the present embodiment. As shown in the figure, the control system is configured by the electronic board 10 including a driver circuit for driving each part of the dispensing mechanical member 3, and a personal computer 12 including the controlling member 77 for controlling the electronic board 10 and analyzing the detection result from the detecting member 4, the input member 78 for inputting data etc. to the controlling member 77, and the display member 79 for displaying result of analysis etc. analyzed in the controlling member 77.

The controlling member 77 controls the electronic board 10 so that the electronic board 10 outputs the drive signal for driving the stepping motor 215 of each sample preparation member 211, the drive signal for temperature adjustment of the first reagent setting member 5, the drive signal for driving the stepping motors 357, 361, 370, and the drive signal for driving the electromagnetic valves in the fluid member 9. The controlling member 77 also retrieves detection signal from the detecting member 4 via the electronic board 10.

A method of measuring protein expression amount and protein activity value using the measuring device A according to the present embodiment will now be described for a case where cancerous tissue in human is used for the sample.

### (1) Pre-process by solubilizing device

Prior to the process by the measuring device A, liquid specimen is collected from the tissue extracted from a cancer patient using the solubilizing device B. In the procedure therefor, the tissue is first placed in an eppen tube using a pin set. The eppen tube is then set in the specimen setting member 33 of the solubilizing device B shown in Fig. 1, and the start button of the operating member 31 is pushed, whereby the pestel 34 lowers to a predetermined position and pushes the tissue in the eppen tube against the bottom of the eppen tube.

Solubilizing liquid such as buffer solution containing surfactant and proteolysis enzyme inhibiting agent is automatically or manually injected into the eppen tube in such state. Thereafter, the pestel 34 is rotated to grind the tissue. The drive of the pestel 34 is stopped after a predetermined time has elapsed, the pestel 34 is moved upward, and thereafter, the eppen tube is taken out from the specimen setting member 33. The solubilized content in the eppen tube is then set in the centrifugal machine, and the obtained supernatant solution is manually collected as a specimen.

### (2) Setting of specimen etc. to the measuring device A

The supernatant solution is placed in two specimen containers and diluted at dilution ratio different from each other, and thereafter, the specimen containers are set at predetermined positions in the first reagent setting member 5. Of the two specimens, one is the specimen for expression amount measurement, and the other is the specimen for activity value measurement.

The instrument 101 is set in the instrument setting member 1, and eight columns 201 are respectively set in the sample preparation member 211 of the activity measurement unit 2.

### (3) Overall flow of process by measuring device A

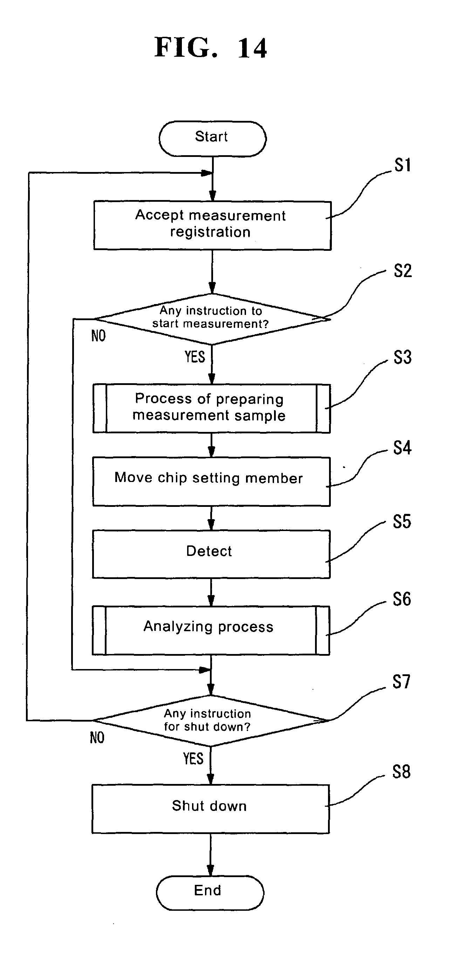

The overall flow of the process by the measuring device A is shown in Fig. 14. In the judgment in the following flowchart, down refers to Yes and right (left) refers to No unless specifically written as "Yes" and "No". The processes described below are all processes controlled by the controlling member 77.

First, when power is turned ON, the process of accepting measurement registration is executed (step S1). In this process, the input of information related to measurement such as specimen number is accepted. Judgment on whether or not instruction to start the measurement has been accepted is made (step S2). The process proceeds to step S3 if Yes, and to S7 if No.

The specimen is then suctioned from the specimen container set in the first reagent setting member 5, and a predetermined process is performed on the suctioned specimen to prepare the sample for fluorescence detection (step S3). The process of this step includes a process of preparing expression amount measurement sample and a process of preparing activity value measurement sample, as hereinafter described in detail, which two processes are executed in parallel.

The instrument setting member 1 in which the instrument 101 including the sample for fluorescence detection is set is moved from the position shown in Fig. 1 into the detecting member 4 (step S4).

The excitation light is then irradiated onto each well of the instrument 101 to detect fluorescence radiated from the sample for fluorescence detection (step S5).

The fluorescence intensity is then acquired by the controlling member 77 of the personal computer 12, and result of analysis from the acquired fluorescence intensity is output (step S6).

Judgment on whether or not instruction to shut down the measuring device A has been accepted is made (step S7). The process proceeds to step S8 if Yes, and to step S1 if No.

Finally, the shut down process is performed, and the power is turned OFF (step S8).

### (4) Process of preparing expression amount measurement sample

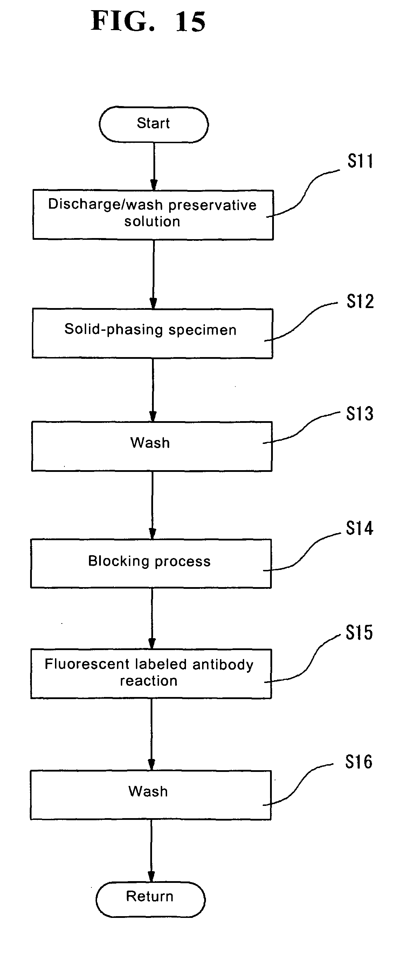

The flow of process of preparing the expression amount measurement sample in step S3 is shown in Fig. 15.

First, preservative solution stored in advance in each well of the upper plate 113a in the instrument 101 is discharged to wash each well (step S11). In washing, the washing liquid is injected to each well from above through the pipette of the dispensing mechanical member 3. Thereafter, the washing liquid injected by negative pressure from below the instrument is then suctioned through the porous film. The following washing step is the same.

The specimen for measuring expression amount is suctioned with pipette from the specimen container set in the first reagent setting member 5, and the specimen is injected to a predetermined well of the upper plate 113a. The specimen is then suctioned by negative pressure from below (suction port 103 corresponding to upper plate 113a) the instrument. The protein is then solid-phased on the porous film of the instrument (step S12).

The predetermined well is then washed with washing liquid, similar to step S11. Components other than protein are thereby removed from the porous film of the instrument (step S13).

Subsequently, blocking solution is injected into the predetermined well and left standing for longer than or equal to fifteen minutes (e.g., thirty minutes), and the blocking solution remaining in the well is discharged (step S14). The fluorescent labeled CDK1 antibody and the fluorescent labeled CDK2 antibody are thereby prevented from solid-phasing at the site of the porous film at where the protein is not solid-phased. Commercialized items may be used for the fluorescent labeled CDK1 antibody and the fluorescent labeled CDK2 antibody.

The fluorescent labeled CDK1 antibody and the fluorescent labeled CDK2 antibody are respectively injected to a predetermined well. In this case, each fluorescent labeled antibody is injected to two wells. After twenty to thirty minutes have elapsed, and the reaction between the fluorescent labeled antibodies and the protein (CDK1 or CDK2) solid-phased on the porous film is terminated, the injected fluorescent labeled antibodies are discharged (step S15).

Finally, the predetermined wells are washed with washing liquid, similar to step 13 (step S16).

### (5) Process of preparing activity value measurement sample

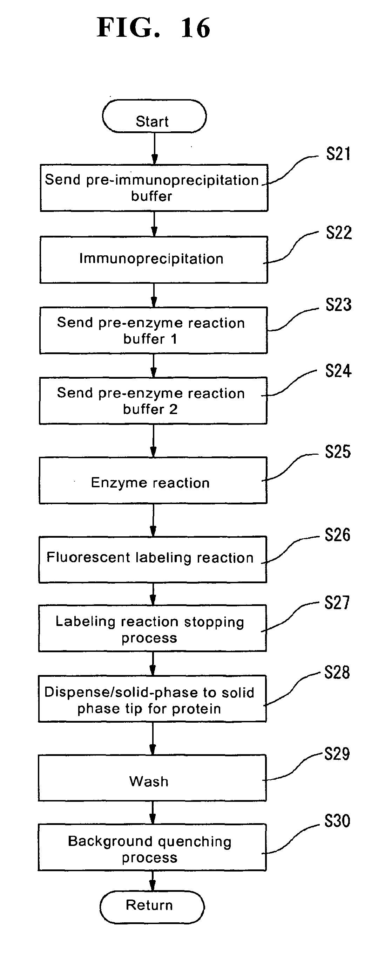

The flow of the process of preparing the activity value measurement sample in step S3 is shown in Fig. 16. In the process of preparing the activity value measurement sample, that in which four sample preparation members 211 are arranged on the near side of the figure, and four sample preparation members 211 are arranged on the far side of the figure is used as the activity measurement unit 2 shown in Fig. 1. Each sample preparation member 211 of the activity measurement unit 2 is referred to as first sample preparation member (Ac1), second sample preparation member (Ac2), third sample preparation member (Ac3), and fourth sample preparation member (Ac4) from the left on the far side of the figure; and fifth sample preparation member (Ac5), sixth sample preparation member (Ac6), seventh sample preparation member (Ac7), and eighth sample preparation member (Ac8) from the left on the near side of the figure.

First, buffer or the washing reagent is injected with pipette of the dispensing mechanical member 3 to the opening 205 for each first to eighth sample preparation member (Ac1 to Ac8). For each first to eighth sample preparation member (Ac1 to Ac8), as the syringe pump 214 and the electromagnetic valve 225 operate as described above, the buffer of the liquid storage member 204 is passed through the carrier 206 and taken into the flow channel 223, and thereafter, again passed through the carrier 206 and returned to the liquid storage member 204. The buffer returned to the liquid storage member 204 in all the columns 204 is suctioned and discarded with the pipette of the dispensing mechanical member 3 (step S21).

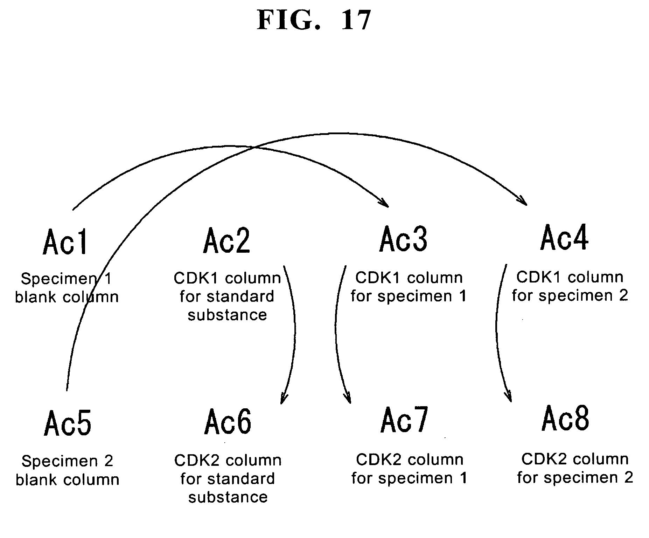

Next, immunoprecipitation (reaction between antibody and CDK) is carried out (step S22). First, the specimen 1 for activity value measurement is suctioned with one pipette and the specimen 2 for activity value measurement is suctioned with the other pipette from one specimen container set in the first reagent setting member 5. The specimen 1 for activity value measurement suctioned from the specimen container is injected to the liquid storage member 204 of the first sample preparation member (Ac1), as shown in Fig. 17. The specimen 1 is sent to the carrier 206 of the first sample preparation member (Ac1) by operating the syringe pump 214 and the electromagnetic valve 225 as described above. In this case, the specimen 1 reciprocates through the carrier 206 of the column 201 once by reciprocating the piston up and down once (suction → discharge).

The specimen 2 for activity value measurement suctioned from the specimen container is first injected to the liquid storage member 204 of the fifth sample preparation member.(Ac5). The specimen 2 is similarly sent to the carrier 206 of the fifth sample preparation member (Ac5). The antibody of the CDK1 nor the antibody of the CDK2 are immobilized on the carrier 206 of the columns 201 of the first sample preparation member (Ac1) and the fifth sample preparation member (Ac5). Therefore, the CDK1 and the CDK2 are not solid-phased in the first sample preparation member (Ac1) and the fifth sample preparation member (Ac5), the specimen 1 containing the CDK1 and the CDK2 is stored in the column 201 of the first sample preparation member (Ac1), and the specimen 2 containing the CDK1 and the CDK2 is stored in the column 201 of the fifth sample preparation member (Ac5).

The specimen 1 stored in the column 201 of the first sample preparation member (Ac1) is then suctioned by the pipette, and injected to the liquid storage member 204 of the third sample preparation member (Ac3). The specimen 1 is then sent to the carrier 206 of the third sample preparation member (Ac3), similar to the above.

The specimen 2 stored in the column 201 of the fifth sample preparation member (Ac5) is suctioned by the pipette, and injected to the liquid storage member 204 of the fourth sample preparation member (Ac4). The specimen 2 is then sent to the carrier 206 of the fourth sample preparation member (Ac4), similar to the above.

The antibody of the CDK1 is immobilized to the carriers 206 of the columns 201 of the third sample preparation member (Ac3) and the fourth sample preparation member (Ac4). Therefore, the CDK1 is solid-phased but the CDK2 is not solid-phased in the third sample preparation member (Ac3) and the fourth sample preparation member (Ac4), the specimen 1 not containing the CDK1 but containing the CDK2 is stored in the column 201 of the third sample preparation member (Ac3), and the specimen 2 not containing the CDK1 but containing the CDK2 is stored in the column 201 of the fourth sample preparation member (Ac4) .

The specimen 1 stored in the column 201 of the third sample preparation member (Ac3) is then suctioned by the pipette, and injected to the liquid storage member 204 of the seventh sample preparation member (Ac7). The specimen 1 is then sent to the carrier 206 of the seventh sample preparation member (Ac7), similar to the above.

The specimen 2 stored in the column 201 of the fourth sample preparation member (Ac4) is suctioned by the pipette, and injected to the liquid storage member 204 of the eighth sample preparation member (Ac8). The specimen 2 is then sent to the carrier 206 of the eighth sample preparation member (Ac8), similar to the above.

The antibody of the CDK2 is immobilized to the carrier 206 of the columns 201 of the seventh sample preparation member (Ac7) and the eighth sample preparation member (Ac8). Therefore, the CDK2 is solid-phased in the seventh sample preparation member (Ac7) and the eighth sample preparation member (Ac8), the specimen 1 not containing the CDK1 nor the CDK2 is stored in the column 201 of the seventh sample preparation member (Ac7), and the specimen 2 not containing the CDK1 nor the CDK2 is stored in the column 201 of the eighth sample preparation member (Ac8) .

The specimen 1 and the specimen 2 stored in the columns 201 of the seventh sample preparation member (Ac7) and the eighth sample preparation member (Ac8) are respectively suctioned with the pipette, and disposed in the waste bath 7.

The first sample preparation member (Ac1) and the fifth sample preparation member (Ac5) are used for activity measurement of the background, the third sample preparation member (Ac3) and the fourth sample preparation member (Ac4) are used for activity measurement of the CDK1, and the seventh sample preparation member (Ac7) and the eighth sample preparation member (Ac8) are used for activity measurement of the CDK2.

Therefore, by injecting the specimen remaining in the column into another column, the background activity measurement, the CDK1 activity measurement, and the CDK2 activity measurement can be performed with small amount of specimen.

The buffer 1 is then sent to the columns 201 to wash and remove unnecessary components in the specimen (step S23).

Subsequently, since the buffer 1 influences enzyme reaction executed in step S25, the buffer 2 is sent to the column 201 to wash off the components of the buffer 1 with the main aim of creating a condition for the relevant enzyme reaction (step S24).

The substrate reaction solution containing substrate Histon H1 and ATPγS is then injected to the column 201, and the piston 218 is reciprocated once (step S25). The liquid pushed out from the lower side of the column 201 in the column 201 is stored as it is. According to such step, the phosphate group is introduced to the Histon H1 with CDK1 and CDK2 as enzymes. The amount of phosphate group is influenced by the strength (i.e., activity value) of the work of the CDK1 or the CDK2 as enzyme, and thus the activity value of the CDK1 or the CDK2 can be obtained by measuring the amount of phosphate group. The background activity value obtained using the first sample preparation member (Ac1) and the fifth sample preparation member (Ac5) shown in Fig. 17 is used to perform background correction as hereinafter described.

The fluorescent labeled reagent is dispensed directly into the column 201 from above the column 201 using the pipette to bind the fluorescent label to the phosphate group introduced into the Histon H1 (step S26). In this case, the pipette repeats suction and discharge of liquid in the column for a predetermined time to stir the liquid in the column 201.

A reaction stopping solution is directly dispensed to the column 201 similar to the fluorescent labeled reagent after elapse of a predetermined time (e.g., for twenty minutes) from the start of step S26. The liquid in the column 201 is stirred by repeating suction and discharge of the liquid in the column for a predetermined time similar to step S26 (step S27). The binding of fluorescent label is thereby stopped.

The liquid in the columns 201 of the first sample preparation member (Ac1), the third sample preparation member (Ac3), the fourth sample preparation member (Ac4), the fifth sample preparation member (Ac5), the seventh sample preparation member (Ac7), and the eighth sample preparation member (Ac8) are injected to predetermined wells of the upper plate 113b of the instrument 101. The specimen is then suctioned by negative pressure from below (suction port 103 corresponding to upper plate 113b) of the instrument (step S28). The Histon H1 containing phosphate group bound with fluorescent label is solid-phased on the porous film of the instrument 101.

The well is washed similar to step S11 in the process of preparing expression amount measurement sample (step S29) .

Finally, an operation of dispensing and discharging quenching reagent for quenching (background quenching) the fluorescent label that did not bind to the phosphate group introduced into the Histon H1 into wells is repeated six times (step S30).

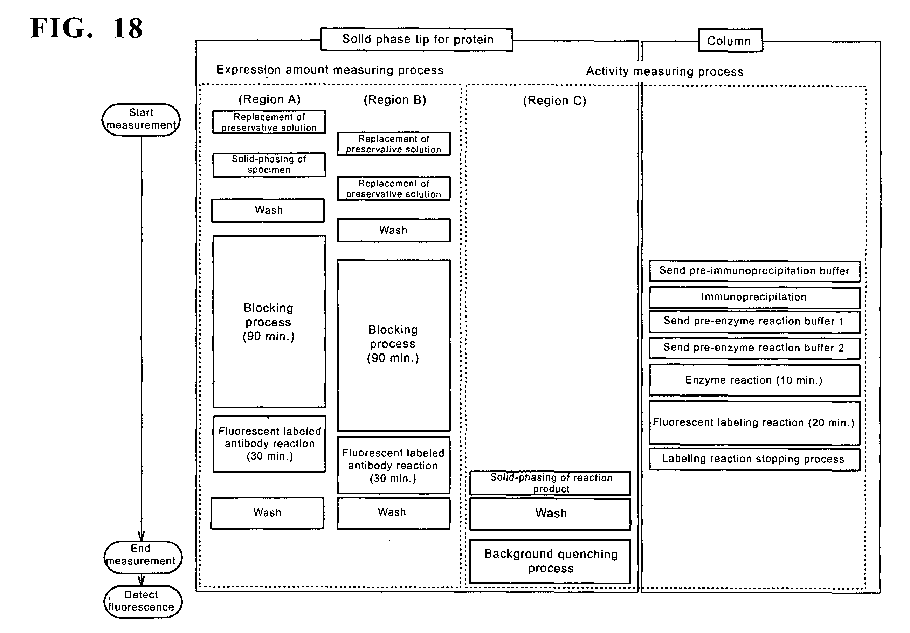

The measuring device A of the present embodiment can perform the processing of the sample for expression amount measurement and the processing of the sample for activity measurement in parallel, but since the instrument 101 capable of suctioning a plurality of regions individually is used, the processing of sample is carried out efficiently and in a short period of time. Fig. 18 shows a sequence chart of each process of the expression amount measurement sample and the activity measurement sample, where the process of measuring the expression amount of two different types of protein in the same expression amount measurement sample is performed in two out of three regions of the instrument 101 with slight shift in time (e.g., about two minutes), and the processes after "solid-phasing of reaction product" of the processes of the activity measurement sample corresponding to the two types of protein are performed in the remaining region (processes before solid-phasing are performed in the column). Therefore, the processing of the sample for expression amount measurement and the processing of the sample for activity measurement having different processing procedures can be performed using one instrument 101 by arranging a plurality of regions, which can be individually suctioned, in the instrument 101. The process of measuring the expression amount of different proteins in the same expression amount measurement sample can be performed using one instrument 101.

### (6) Analyzing process

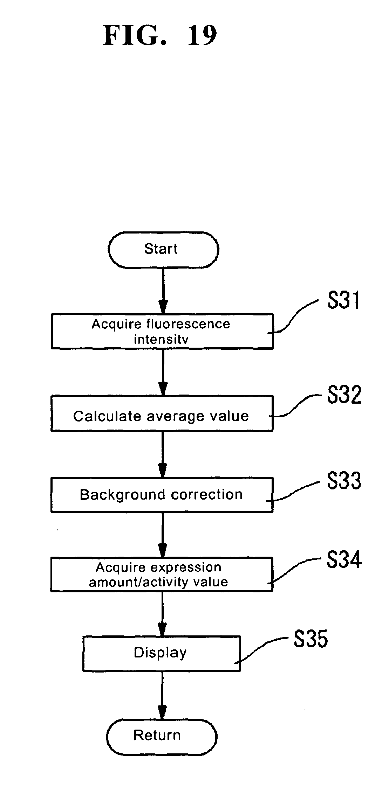

As shown in Fig. 19, analysis is performed from the fluorescence intensity obtained in the detecting member, and expression amount and activity value are output as result of analysis.

First, the controlling member 77 acquires two fluorescent intensities for each of activity of CDK1, expression of CDK1, activity of CDK2, expression of CDK2, activity of background, and expression of background through the electronic board 10 from the light receiving system of the detecting member 4 (step S31).

Thereafter, the controlling member 77 calculates the average value of the fluorescence intensities obtained two at a time for each item (step S32).

The background activity (average value) is subtracted from the fluorescence intensity (average value) of the CDK1 activity, and the background activity (average value) is subtracted from the fluorescence intensity (average value) of the CDK2 activity to perform background correction for the CDK1 activity and the CDK2 activity. The background correction is similarly performed for the CDK1 expression and the CDK2 expression (step S33).

Next, the expression amount and the activity value are acquired using analytical curve for each item (step S34). The analytical curve is data for converting fluorescence intensity to expression amount or activity value, and is created in advance using two or more types of specimens which expression amount or activity value is known when the lot of the reagent is changed, and stored in the RAM 91c of the controlling member 77. The acquired expression amount and activity value is displayed (step S35) .

### [Processing of activity measurement sample using magnetic beads]

In the embodiment described above, the column including a cylindrical body having the carrier arranged therein is used when processing the activity measurement sample, but the present invention is not limited thereto, and the activity measurement sample may be processed using magnetic beads as described below.

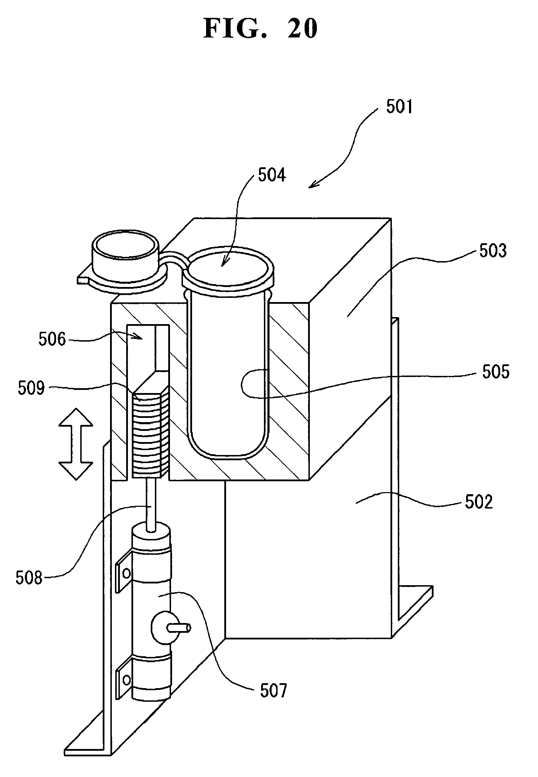

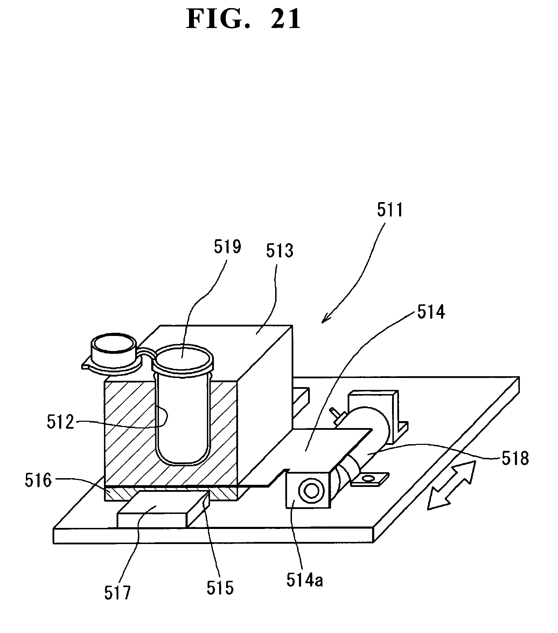

Figs. 20 and 21 are explanatory views of the activity measurement unit using magnetic beads, where Fig. 20 shows a treating member for enzyme reaction of the measurement unit, and Fig. 21 shows a treating member for fluorescent labeling reaction of the measuring unit. The treating member for enzyme reaction and the treating member for fluorescent labeling reaction form one set of activity measurement unit, the one set corresponding to one sample preparation member 211 in the embodiment using the column.

The treating member for enzyme reaction 501 shown in Fig. 20 includes a supporting plate 502 arranged in an upstanding manner on the upper surface of the apparatus body 20 of the measuring device A and a holding block 503 fixed at the upper part of the supporting plate 502. An elongate hole 505 for accommodating a reaction container 504 is formed in the upper surface of the holding block 503, and the predetermined reaction container 504 is set in the hole 505. An elongate concave part 506 parallel to the longitudinal direction of the hole 505 and proximate to the hole 505 is formed at the bottom surface of the holding block 503. An electromagnet 509 connected to the piston 508 of the air cylinder 507 is slidably arranged along the longitudinal direction of the concave part 506 in the concave part 506. The air cylinder 507 is fixed to the lower part of the supporting plate 502.

The treating member for fluorescent labeling reaction 511 shown in Fig. 21 includes a holding block 513 provided with an elongate,hole 512 for accommodating a reaction container 519 on the upper surface, and a supporting plate 514 having the holding block 513 fixed on the upper surface. A slidable body 516 provided with a groove 515 is fixed at a position corresponding to the holding block 513 at the lower surface of the supporting plate 514. The groove 515 of the slidable body 516 engages a band plate shaped linear guide 517 fixed to the upper surface of the apparatus body 20 of the measuring device A, so that the holding block 513 and the supporting plate 514 are slidable along the linear guide 517 by way of the slidable body 516.

An air cylinder 518 is arranged parallel to the linear guide 517, and a hanging part 514a formed at the corner of the supporting plate 514 is connected to the piston distal end of the air cylinder 518. According to such configuration, the holding block 513 slidably moves along the linear guide 517 according to the movement of the piston.

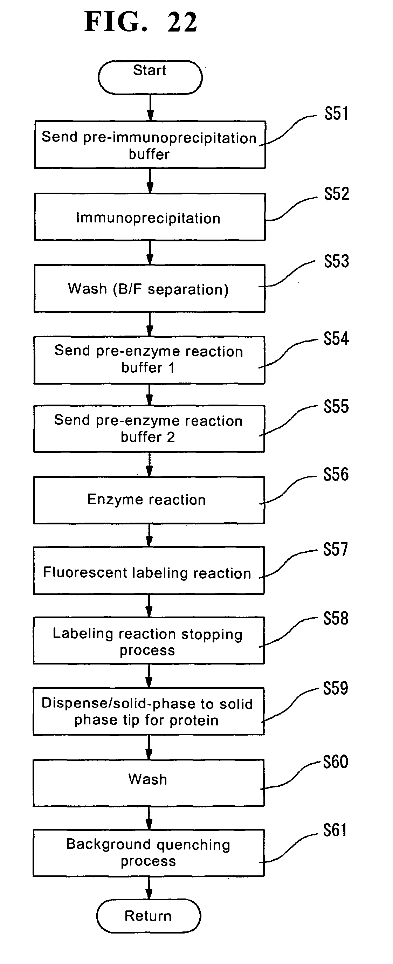

An example of a process of preparing the activity measurement sample using the activity measurement unit shown in Figs. 20 and 21 will now be described with the flowchart of Fig. 22.

First, the pre-immunoprecipitation buffer containing magnetic beads solid phased with the CDK1 (or CDK2) antibody is injected with the pipette of the dispensing mechanical member 3 to the reaction container 504 in the treating member for enzyme reaction 501 shown in Fig. 20. The electromagnet 509 is then turned OFF and the air cylinder 507 is turned OFF to move the electromagnet 509 downward in order to remove the liquid components. After turning ON the electromagnet 509 thereafter, the air cylinder 507 is turned ON to move the electromagnet 509 upward. The liquid in the reaction container 504 is suctioned and discarded by the dispensing mechanical member 3 in this state (step S51).

The immunoprecipitation (reaction between antibody and CDK) is then carried out (step S52). First, the specimen for activity value measurement is suctioned with the pipette of the dispensing mechanical member 3 from the specimen container set in the first reagent setting member 5, and injected to the reaction container 504. After turning ON the electromagnet 509, compressed air is sent to the air cylinder 507 to move the electromagnet 509 upward (operation A). The electromagnet 509 is then turned OFF and the air cylinder 509 is turned OFF to move the electromagnet 509 downward (operation B). Operation A and operation B are repeated for a several ten minutes to a few hours. The magnetic beads then move up and down the wall surface of the reaction container 504, thereby stirring the liquid inside the reaction container 504. The CDK1 (CDK2) antigen in the specimen is then efficiently trapped by the antibody solid-phased on the bead surface through stirring.

Washing is then performed to remove unnecessary components in the specimen (step S53). First, the electromagnet 509 is turned OFF and the air cylinder 507 is turned OFF to move the electromagnet 509 downward. After turning ON the electromagnet 509, the air cylinder 507 is turned ON to move the electromagnet 509 upward. The liquid in the reaction container 504 is then suctioned and discarded by the dispensing mechanical member 3 in such state.

The pre-enzyme reaction buffer 1 is then injected to the reaction container 504 by the dispensing mechanical member 3 (step S54). The electromagnet 509 is then turned OFF and the air cylinder 507 is turned OFF to move the electromagnet 509 downward (operation C). After turning ON the electromagnet 509, the air cylinder 507 is turned ON to move the electromagnet 509 upward (operation D). Operation C and operation D are repeated over a few times.

Subsequently, the electromagnet 509 is turned OFF and the air cylinder 507 is turned OFF to move the electromagnet 509 downward. After turning ON the electromagnet 509, the air cylinder 507 is turned ON to move the electromagnet 509 upward. The liquid in the reaction container 504 is then suctioned and discarded by the dispensing mechanical member 3.

The electromagnet 509 is then turned OFF and the air cylinder 507 is turned OFF to move the electromagnet 509 downward. The pre-enzyme reaction buffer 2 is injected to the reaction container 504 by the dispensing mechanical member 3 (step S55). After turning ON the electromagnet 509, the air cylinder 507 is turned ON to move the electromagnet 509 upward (operation E). Then, after turning OFF the electromagnet 509, the air cylinder 507 is turned OFF to move the electromagnet 509 downward (operation F). Operation E and operation F are repeated over a few times.

Subsequently, the electromagnet 509 is turned OFF and the air cylinder 507 is turned OFF to move the electromagnet 509 downward. After turning ON the electromagnet 509, the air cylinder 507 is turned ON to move the electromagnet 509 upward. The liquid in the reaction container 504 is then suctioned and discarded by the dispensing mechanical member 3.

The substrate reagent is injected to the reaction container 504 for enzyme reaction (step S56). First, the electromagnet 509 is turned OFF and the air cylinder 507 is turned OFF to move the electromagnet 509 downward. The substrate reagent is then injected to the reaction container 504 by the dispensing mechanical member 3. After turning ON the electromagnet 509, the air cylinder 507 is turned ON to move the electromagnet 509 upward (operation G). After turning OFF the electromagnet 509, the air cylinder 507 is turned OFF to move the electromagnet 509 downward (operation H). Operation G and operation H are repeated for several ten minutes to a few hours.

The electromagnet 509 is turned OFF, and the air cylinder 507 is turned OFF to move the electromagnet 509 downward. After turning ON the electromagnet 509, the air cylinder 507 is turned ON to move the electromagnet 509 upward, and the liquid in the reaction container 504 is suctioned by a constant amount by the dispensing mechanical member 3 and injected to the reaction container 519 of the treating member for fluorescent labeling reaction 511 shown in Fig. 21.

The fluorescent labeling reagent is injected to the reaction container 519 for fluorescent labeling reaction (step S57). First, the fluorescent labeling reagent is injected to the reaction container 519 by the dispensing mechanical member 3.

ON/OFF of the air cylinder 518 is repeated for several ten minutes and the holding block 513 accommodating the reaction container 519 is reciprocated along the linear guide 517 to stir the liquid in the reaction container 519. The air cylinder 518 is turned OFF after elapse of a predetermined time to stop the stirring operation.

The reaction stopping reagent is injected to the reaction container 519 to stop the labeling reaction (step S58). First, the reaction stopping reagent is injected to the reaction container 519 by the dispensing mechanical member 3.

ON/OFF of the air cylinder 518 is repeated for several ten minutes and the holding block 513 accommodating the reaction container 519 is reciprocated along the linear guide 517 to stir the liquid in the reaction container 519. The air cylinder 518 is turned OFF after elapse of a predetermined time to stop the stirring operation.

After dispensing the fluorescent labeled reaction product from the reaction container 519 to the predetermined well of the instrument 101 by the dispensing mechanical member 3, the instrument 101 is suctioned from below (step S59). The Histon H1 containing phosphate group bound with fluorescent label is thereby solid-phased on the porous film of the instrument 101.

The well is then washed similar to step S11 in the process of preparing expression amount measurement sample (step S60).

Finally, an operation of dispensing and discharging the quenching reagent for quenching (background quenching) the fluorescent label that did not bind to the phosphate group introduced into the Histon H1 into wells is repeated six times (step S61).

The above description is made on the processing procedure of the unit for processing one specimen in one item, but must be arranged for the number of specimens x number of items with the treating member for enzyme reaction shown in Fig. 20 and the treating member for fluorescent labeling reaction shown in Fig. 21 as one set to carry out processes for multiple specimens in multiple items.

In this case, a plurality of holes 512 is preferably formed to hold a plurality of reaction containers 519 in the holding block 513 in the treating member for fluorescent labeling reaction shown in Fig. 21 to reduce the occupying area of the units in the apparatus. In the treating member for enzyme reaction shown in Fig. 20, each reaction container 504 must be stirred and B/F separated at different timings, and it is not preferable to set a plurality of reaction containers 504 in one holding block 503 in that the electromagnet must be independently controlled and in that magnetic force must be prevented from influencing the magnetic beads in other reaction containers 504.

The instrument in the embodiment described above has a configuration in which the porous film is sandwiched between the upper and lower plates, but may have a configuration in which the porous film is fixedly attached to the bottom surface of one plate provided with a plurality of through holes and forming a plurality of wells. In this case, independent partitions for the number corresponding to the number of regions are provided and a suction mechanism capable of independently suctioning each partition is arranged on the surface on the side fixedly attached with the porous film in the instrument to independently suction a plurality of regions. Each partition is arranged closely contacting the bottom surface of the plate so that the opening edge of the partition air tightly covers the entire surface of the corresponding region.

Although the instrument in the embodiment described above comprises at least two plate members, these plate members can be composed to one plate member. For example, the upper plate 113 can be configured by one plate which has the all configurations included in a first upper plate 113a, a second upper plate 113b, and a third upper plate 113c.

The foregoing detailed description and examples have been provided by way of explanation and illustration, and are not intended to limit the scope of the invention. Many variations in the presently preferred embodiments will be obvious to one of ordinary skill in the art, and remain within the scope of the invention.

## Claims

1. An instrument for forming a solid phase of protein on a porous film, comprising:
a substrate plate member including a first region provided with a plurality of through holes and a second region provided with a plurality of through holes;
a first porous film;
a first plate member including a third region provided with a plurality of through holes, the third region being arranged to face the first region and the first porous film being sandwiched between the third region and the first region;
a second porous film; and
a second plate member including a fourth region provided with a plurality of through holes, the fourth region being arranged to face the second region and the second porous film being sandwiched between the fourth region and the second region.

2. The instrument according to claim 1, wherein
the first plate member is arranged on the substrate plate member so that each through hole formed in the third region and the first porous film form a well; and
the second plate member is arranged on the substrate plate member so that each through hole formed in the fourth region and the second porous film form a well.

3. The instrument according to claim 1, wherein
the first plate member is arranged on the substrate plate member so that each through hole formed in the first region and each through hole formed in the third region are coaxially arranged; and
the second plate member is arranged on the substrate plate member so that each through hole formed in the second region and each through hole formed in the fourth region are coaxially arranged.

4. The instrument according to any one of preceding claims 1-3, wherein the substrate plate member includes a convex part for partitioning the first region and the second region.

5. The instrument according to claim 4, wherein the convex part has a rib shape.

6. The instrument according to claim 5, wherein the substrate plate member further includes a rib-shaped convex part (second convex part) surrounding a periphery of a region including the first region and the second region.

7. The instrument according to claim 6, wherein the first plate member and the second plate member respectively includes a groove engaging the second convex part of the substrate plate member.

8. The instrument according to claim 6 or claim 7,
wherein the convex part and the second convex part are integrated.

9. The instrument according to any one of preceding claims 6-8, wherein the convex part and the second convex part form a region for arranging the porous film on the substrate plate.

10. The instrument according to any one of preceding claims 1-9, further comprising a first filter and a second filter; wherein
the first porous film and the first filter are sandwiched by the third region and the first region; and
the second porous film and the second filter are sandwiched by the fourth region and the second region.

11. The instrument according to any one of preceding claims 1-10, wherein
a solid phase for expression amount measurement of the protein is formed on the first porous film; and
a solid phase for activity measurement of the protein is formed on the second porous film.

12. The instrument according to claim 11, wherein the protein is contained in a living body sample.

13. The instrument according to claim 12, wherein the living body sample is cancerous tissue.

14. The instrument according to any one of preceding claims 11-13, wherein the protein is cyclin-dependent kinase.

15. A protein solid phase forming device comprising:
an instrument holder for holding an instrument for forming a solid phase of protein on a porous film;
a first suction member arranged so as to face a first region of the instrument held by the instrument holder;
a second suction member arranged so as to face a second region of the instrument held by the instrument holder; and
a suction driving member for selectively driving the first suction member and the second suction member;
wherein the instrument comprises,
a substrate plate member including the first region provided with a plurality of through holes and the second region provided with a plurality of through holes,
a first porous film,
a first plate member including a third region provided with a plurality of through holes, the third region being arranged to face the first region and the first porous film being sandwiched between the third region and the first region,
a second porous film, and
a second plate member including a fourth region provided with a plurality of through holes, the fourth region being arranged to face the second region and the second porous film being sandwiched between the fourth region and the second region.

16. The protein solid phase forming device according to claim 15, wherein
a solid phase for expression amount measurement of the protein is formed on the first porous film; and
a solid phase for activity measurement of the protein is formed on the second porous film.

17. The protein solid phase forming device according to claim 16, further comprising:
a mounting member for mounting a first sample solubilized with a living body sample and a substrate of the protein to be measured in the first sample;
a sample preparation member for preparing a second sample for activity measurement using the first sample and the substrate; and
a dispensing member for dispensing the first sample to the through holes of the third region and the second sample to the through holes of the fourth region.

18. The protein solid phase forming device according to claim 17, wherein
the mounting member mounts a first labeled substance which specifically binds to the protein to be measured, and a second labeled substance which specifically binds to a reaction product of the protein to be measured and the substrate;
the sample preparation member prepares the second sample using the first sample, the substrate, and the second labeled substance; and
the dispensing member dispenses the first labeled substance to the through holes of the third region dispensed with the first sample, and dispenses the second sample prepared by the sample preparation member to the through holes of the fourth region.

19. An instrument for forming a solid phase of protein on a porous film, comprising:
a substrate plate member including a first region provided with a plurality of through holes and a second region provided with a plurality of through holes;
a first porous film;
a second porous film; and
a plate member including a third and a fourth regions provided with a plurality of through holes, the third region being arranged to face the first region and the first porous film being sandwiched between the third region and the first region, the fourth region being arranged to face the second region and the second porous film being sandwiched between the fourth region and the second region.
